# EUROPEAN PATENT APPLICATION

(11) **EP 0 869 678 A2**
(43) Date of publication of application: **07.10.1998**
(21) Application number: 98302582.6
(22) Date of filing: 02.04.1998
(51) Int. Cl.: H04N 5/913

(54) **Copy guard state indication**

(30) Priority: 04.04.1997 JP 86323/97
(71) Applicant: SONY CORPORATION, Tokyo (JP)
(72) Inventor: Ikeda, Nozomu, Shinagawa-ku, Tokyo (JP); Ogino, Akira, Shinagawa-ku, Tokyo (JP); Komatsubara, Michimasa, Shinagawa-ku, Tokyo (JP)
(74) Representative: Nicholls, Michael John

(57) **Abstract**

A copy guard state detection unit detects whether copy guard is applied to the input video signal. If the copy guard state detection unit detects that copy guard is applied to the input video signal, a LED (7) lights or blinks. Further if copy guard is applied to the input video signal and the recording device is in recording state or record waiting state, then the display information generation unit (8) generates a display information for indicating that copy guard is applied to the input video signal, and the display information is displayed on a LCD (10).

## Description

This invention relates to, for example, when a copy guard video signal to which copy guard is applied is to be processed, a method and device to indicate that the video signal to be processed is a video signal to which copy guard is applied.

The VTR (Video Tape Recorder) has been popularized, and a lot of software which is reproducible using a VTR has been provided. Recently, digital reproduction devices and recording/reproduction devices such as digital VTRs and DVDs (Digital Video Disc) are now used practically, and pictures of good quality and sound of good quality can easily be reproduced and viewed.

On the other hand, however, the popularization gives rise to a problem that such abundant software is duplicated without any restriction, and heretofore various duplication prevention measures have been developed.

For example, though it is a method for inhibiting not directly duplication of analog video signals, a method in which the difference in AGC (Auto Gain Control) system or APC (Auto Phase Control) characteristics between a recording device such as a VTR and a monitor receiver for displaying a picture is utilized to prevent duplication substantially is available.

In detail, for example, a VTR performs AGC using a pseudo sync signal inserted in an video signal and a monitor receiver employs AGC system not using the pseudo sync signal. In the method which utilizes the difference of AGC system, an extraordinarily high level pseudo sync signal is previously inserted as a sync signal for AGC when an analog video signal is recorded in an original recording medium, and then the extraordinarily high level pseudo sync signal is inserted in a video signal supplied from a playback VTR to a recording VTR as a sync signal for AGC.

The APC in a VTR follows a color burst signal in a video signal with a short time constant but the APC in a monitor receiver follows with a relatively long time constant. In the method which utilizes the difference of APC characteristics, the phase of a color burst signal of an video signal is previously inverted partially when analog video signals are recorded in an original recording medium, and then the video signal having the partially inverted color burst signal is outputted as a video signal supplied from a playback VTR to a recording VTR.

In the case described herein above, the monitor receiver which receives supply of the analog video signal from the playback VTR plays back a picture normally without receiving an adverse effect of the partial phase inversion of the color burst signal used for the pseudo sync signal and APC.

However, in the VTR which receives supply of the analog video signal having the inserted pseudo sync signal described herein above supplied from the playback VTR or subjected to the phase inversion control of the color burst signal and records the analog video signal in a recording medium, the VTR can not perform gain control or phase control based on the input signal, and records the video signal not normally. Therefore, a normal picture can not be viewed when the recorded video signal is played back.

In the case which involves an analog video signal, copy guard methods, which do not involve duplication inhibition directly, but involves duplication of an abnormal video signal for a duplicated video signal, have been used.

In the above-mentioned duplication prevention method utilizing the difference of AGC system between a VTR and monitor receiver or utilizing the difference in characteristics of APC, video signals are recorded not normally but the recording process itself is performed in the same way as performed on duplication-permitted video signals.

When the video signal to be recorded is viewed on a monitor receiver during recording processing, because a normal picture is displayed on the monitor receiver, a user can consider that the picture which is being recorded on a video tape is recorded normally.

In the case that the video signal is an illegally duplicated video signal, which is originally a duplication inhibited video signal, and a normal playback picture is therefore played back not normally from the video signal recorded on the video tape because of applied copy guard system which utilizes the difference of AGC system between a VTR and monitor receiver or difference of APC characteristics, it is likely to happen that a user can not know the reason of the abnormal playback picture and, in some cases, the user mistakes to think that the VTR used for duplication recording or VTR used for playing back is failed to work.

In some cases, the user can recognizes that the duplicated video signal is recorded not normally because of illegal duplication of the duplication inhibited video signal after a long time, such a case is not preferable.

VTR sellers and manufactures, in some cases, receive complains that a VTR is recorded or played back not normally from users, because a normal playback picture is not obtained from a duplicated video signal due to illegal duplication of a duplication-inhibited video signal to the video tape.

In view of the above-mentioned problems, it is an aim of the present invention to prevent a user from mistakenly thinking that a device is failed when the user processes a video signal to which copy guard is applied.

According to the feature of the copy guard state indication method of the present invention, whether copy guard processing is applied to a video signal is detected, if copy guard processing applied to the video signal is detected, then the notice that copy guard is applied to the video signal is indicated.

As the result, a user can recognize that the video signal is not recorded normally though duplication operation is performed for recording the video signal and a normal playback output is not obtained from the duplicated video signal if the notice that copy guard is applied to the input or played back video signal is indicated.

Therefore, for example, in the case that a duplicated video signal is not recorded normally or a normal playback picture is not obtained because copy guard system so-called macro-vision or so-called color stripe is applied, a user will not mistake to think that a recording device or playback device used for duplication or playback of the video signal is failed to work because the notice is indicated to the user prior to playback.

According to another feature of the copy guard state indication method of the present invention, if whether copy guard processing applied to a video signal is detected and the recording state of the video signal in a recording medium or record waiting state of the video signal in a recording medium is detected, the notice that copy guard is applied to the video signal is indicated.

Thereby, in the case that a video signal to which copy guard is applied is wanted to duplicated, a user can recognize that copy guard is applied to the video signal to be duplicated not when playing back the duplicated video signal through the duplication this time as in the conventional case but now when recording this time.

In the copy guard indication method of the present invention, if copy guard applied to a video signal is detected, or if copy guard applied to the video signal is detected and the recording state of the video signal in a recording medium or record waiting state of the video signal in a recording medium is detected, a display information signal for indicating that copy guard is applied to the video signal is generated, the display information signal is superimposed on the video signal, the superimposed video signal or display information signal, instead of the video signal, is displayed to indicate that copy guard is applied to the video signal

As described herein above, the notice that copy guard processing is applied to the video signal is displayed, and a user can recognize consistently that copy guard is applied to the video signal.

Embodiments of the present invention will be described in detail hereinafter by way of non-limitative example with reference to the drawings, in which:

Fig. 1 is a block diagram for illustrating one embodiment of a video signal recording device of the present invention.

Fig. 2 is a flowchart for describing the process performed by a display information generation unit of the video signal recording device shown in Fig. 1.

Fig. 3 is a block diagram for illustrating another embodiment of a video signal recording device of the present invention.

Fig. 4 is a flowchart for describing the process performed by a display information generation unit of the video signal recording device shown in Fig. 3.

Fig. 5 is a block diagram for illustrating yet another embodiment of a video signal recording device of the present invention.

Fig. 6 is a flowchart for describing the process performed by a display information generation unit of the video signal recording device shown in Fig. 5.

Fig. 7 is a block diagram for illustrating an embodiment of a video signal playback device of the present invention.

A video signal recording device and video signal playback device described hereinafter are structured by applying a video signal processing device in accordance with the present invention, the case that the present invention is applied to a VTR (Video Tape Recorder) which is capable of recording and playing back is described. For the purpose of simplification, description of audio signal system is omitted.

Input video signals and playback video signals involved in video signal recording devices and video signal playback devices described hereinafter are duplication permitted video signals which are duplicated normally or copy guard video signals so-called macro-vision or so-called color stripe for preventing duplication recording of normal video signals.

In detail, as described hereinbefore, the video signal to which copy guard so-called macro-vision is applied is a video signal in which an extremely high level pseudo sync signal is interpolated as a sync signal for AGC of the recording device, or the video signal to which copy guard so-called color stripe is applied is a video signal having the color burst signal phase inverted partially.

### [First embodiment]

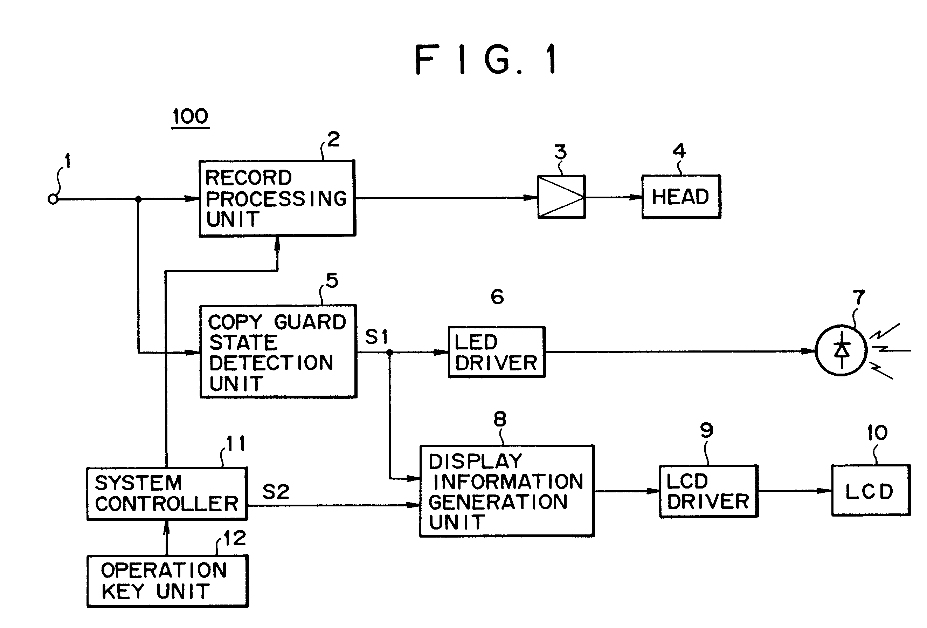

Fig. 1 is a drawing for illustrating a video signal recording device 100 (referred to simply as recording device hereinafter) of this embodiment. In other words, the recording device 100 corresponds to a recording system of a VTR in this first embodiment.

As shown in Fig. 1, the recording device 100 of the first embodiment is provided with a video signal input terminal 1, a record processing unit 2, a record amplifying circuit 3, a recording head 4, a copy guard state detection unit 5, a LED (Light Emission Diode) driver 6, a LED 7, a display information generation unit 8, a LCD (Liquid Display) driver 9, a LCD 10, a system controller 11, and an operation key unit 12.

The system controller 11 is a microcomputer provided with a CPU (Central Processing Unit), ROM (Read Only Memory), and RAM (random Access Memory), which controls all the units in the recording device 100 of the first embodiment.

The operation key unit 12 connected to the system controller 11 is provided with a various keys such as a recording start key (REC key), rewinding key (REW key), fast winding key (FWD key), stop key (STOP key), and pause key (PAUSE key), which are operated by users.

In the first embodiment, video signals played back by a playback VTR and video signals selected by a television tuner are inputted to the recording device 100 from the video signal input terminal 1.

When a user pushes down the recording start key, the system controller 11 indicates that the user instructs the record processing unit 1 to start recording, and controls all other units of the recording device 100 to start recording process.

The record processing unit 2 converts the supplied video signal to a recording video signal which is suitable for recording, and supplies it to the record amplifying circuit 3.

The recording head 4 generates a magnetic field corresponding to the supplied recording video signal, and records magnetically the video signal on a video tape (magnetic tape) mounted on the recording device 100.

If copy guard in which an extremely high level pseudo sync signal is interpolated as a sync signal for AGC to the input video signal or color burst signal phase of the input video signal is inverted partially as described hereinbefore is applied, the recording device 100 can not perform normal gain control (AGC) or phase control (APC), and can not record normal video signal. In such a case, a normal playback picture can not obtained when the recorded video signal is played back.

On the other hand, the copy guard state detection unit 5 detects whether copy guard is applied to the supplied video signal. Whether copy guard is applied to the input video signal supplied to the copy guard state detection unit 5 is detected by detecting whether an extremely high level pseudo sync signal is added to the supplied video signal as a pseudo sync signal for gain control performed in the recording device 100, or by detecting whether the color burst signal phase is inverted partially.

The copy guard state detection unit 5 generates a signal S1 which indicates whether copy guard is applied. If the copy guard state detection unit 5 detects that an extremely high level pseudo sync signal is added to the supplied video signal, or detects that the color burst signal phase is inverted partially, then the signal S1 is a high level signal, and on the other hand, if either extremely high level pseudo sync signal and partially inverted color burst signal phase are not detected, then the signal S1 is a low level signal. The generated signal S1 is supplied to the LED driver 6 and display information generation unit 8.

The LED driver 6 supplies a driving current to the LED 7 to light the LED 7 when the LED driver 6 receives supply of a high level signal S1 from the copy guard state detection unit 5. Lighting or blinking of the LED 7 indicates a user that copy guard is applied to the input video signal. As described herein above, the LED 7 functions as an indication means which indicates a user that copy guard is applied to the input video signal.

Upon receiving supply of a high level signal S1 from the copy guard state detection unit 5, the LED driver 6 supplies a current to the LED 7 to light the LED 7. The LED 7 begins to light or blink, and the lighting or blinking indicates a user that copy guard is applied to the input video signal. As described herein above, the LED 7 functions as an indication means for indicating that copy guard is applied to the input video signal.

A message for indicating that copy guard is applied to the input video signal is displayed on the LCD 10 if the recording device 100 is in recording state or record waiting state of a video signal and copy guard is applied to the video signal inputted from the input terminal 1 as described herein above.

The LCD 10 has a relatively large display screen for displaying various messages such as a guidance message or notice message.

The system controller 11 recognizes operation state of the recording device 100. In detail, the system controller 11 controls all the units of the recording device 100 in response to instructive input information supplied from the operation key unit 12 to the system controller 11 when a user operates various keys of the operation key unit 12, and performs processing corresponding to the instructive input information.

In detail, the system controller 11 recognizes operation mode in which the recording device 100 is controlled based on the instructive input information in response to the user operation from the operation key unit 12, and supplies a signal which indicates the current operation state of the recording device 100.

The system controller 11 of the recording device 100 judges the state that the pause key is pushed down while the recording start key is being pushed down to be the state of record waiting. As described herein above, the system controller 11 functions as an operation identification means.

The display information generation unit 8 generates a display information to be displayed on the LCD 10 when the signal S1 from the copy guard state detection unit 5 indicates that copy guard is applied to the input video signal, and the signal S2 for indicating operation state from the system controller 11 indicates that the recording device 100 is in recording state or record waiting state, and supplies it to the LCD 10 via the LCD driver 9.

Hence, the LCD 10 displays a message which indicates that copy guard is applied to the input video signal and the video signal can not be duplicated normally because of the copy guard applied to the input video signal such as "Duplication is inhibited. Normal recording is impossible". Therefore, the LCD 10 functions as an indication means for indicating that copy guard is applied to the input video signal like the LED 7.

As described herein above, the LED 7 of the recording device 100 lights or blinks when the recording device 100 detects that copy guard is applied to the video signal inputted from the video signal input terminal 1. The lighting or blinking indicates a user that copy guard is applied to the input video signal.

Further, in the recording device 100, if copy guard applied to the input video signal is detected and the recording device 100 is judged to be in recording state or record waiting state, when the input video signal is ready for recording, a message for indicating that copy guard is applied to the input video signal and the video signal can not be recorded normally is displayed on the LCD 10.

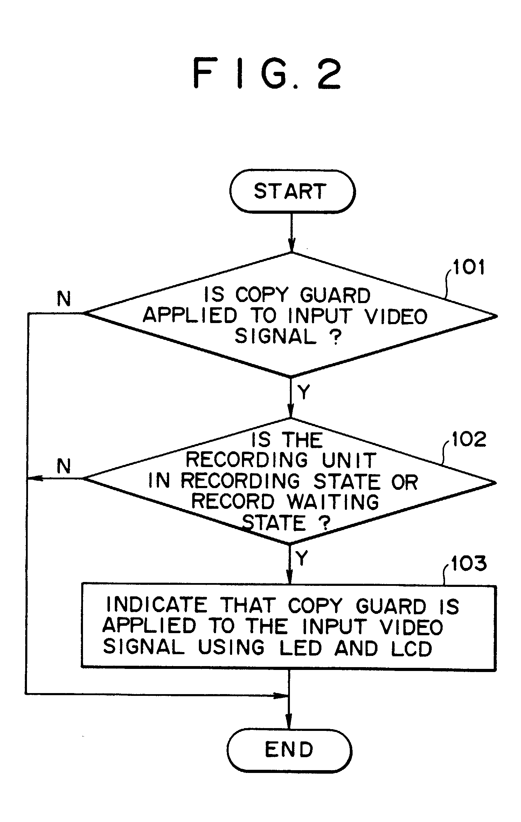

Fig. 2 is a flowchart for describing processes in the display information generation unit 8 of the recording device 100 of the first embodiment.

As described herein above, the copy guard state detection unit 5 detects whether copy guard is applied to the input video signal, and supplies the detection result to the display information generation unit 8 as the signal S1.

The operation state of the recording device 100 which is identified by the system controller 11 is supplied to the display information generation unit 8 as the signal S2 for indicating the operation state.

The display information generation section 8 judges first whether copy guard is applied to the input video signal based on the signal S1 supplied from the copy guard state detection unit 5 (step 101).

If the display information generation unit 8 judges that copy guard is not applied to the video signal in the judgement processing of the step 101, then the display information generation unit 8 does nothing, and the process shown in Fig. 2 is brought to an end. On the other hand, if the display information generation unit 8 judges that copy guard is applied to the video signal in the judgement processing of the step 101, then the display information generation unit 8 judges whether the recording device 100 is in recording state or record waiting state or not based on the signal S2 from the system controller 11 (step 102).

If the recording device 100 is not in recording state or not in record waiting state in the judgement processing in the step 102, the process shown in the flowchart of Fig. 2 is brought to an end. On the other hand, if the recording device 100 is in recording state or record waiting state in the judgement processing in the step 102, the display information generation unit 8 generates and outputs a display information for being displayed on the LCD 8 (step 103).

As described herein above, in the recording device 100, if the information display generation unit 8 detects that copy guard is applied to the input video signal, the LED 8 is lighted or becomes blinking to indicate a user that copy guard is applied to the input video signal.

Further, in the recording device 100, if the display information generation unit 8 detects the copy guard applied to the input video signal and the recording device 100 is judged to be in recording state or record waiting state, also the LCD 10 displays the display information generated from the display information generation unit 8 to indicate a user that copy guard is applied to the input video signal and the video signal can not be recorded normally.

As the result, in the case that a normal playback picture is not obtained from the video signal recorded on a video tape because copy guard so-called micro-vision or color stripe is applied, a user can recognize it when recording.

### [Second embodiment]

In the recording device 100 of the first embodiment described hereinbefore, in the case that copy guard is applied to the input video signal inputted from the video signal input terminal 1, the lighting or blinking of the LED 7 provided to the recording device 100 and the message displayed on the LCD 10 indicate a user the copy guard.

However, in the case that a video signal is recorded using a recording device such as a VTR, the video signal is recorded with viewing the picture on a monitor receiver. The recording device 200 of the second embodiment, in the case that copy guard is applied to the input video signal, generates a display information for indicating the copy guard and superimposes the generated display information on the output video signal outputted to the monitor receiver.

The display information for indicating that copy guard is applied to the input video signal and a normal video signal is not recorded is superimposed and displayed on the display screen of the monitor receiver which receives the output video signal outputted from the recording device 200, and the copy guard is indicated to a user consistently and definitely.

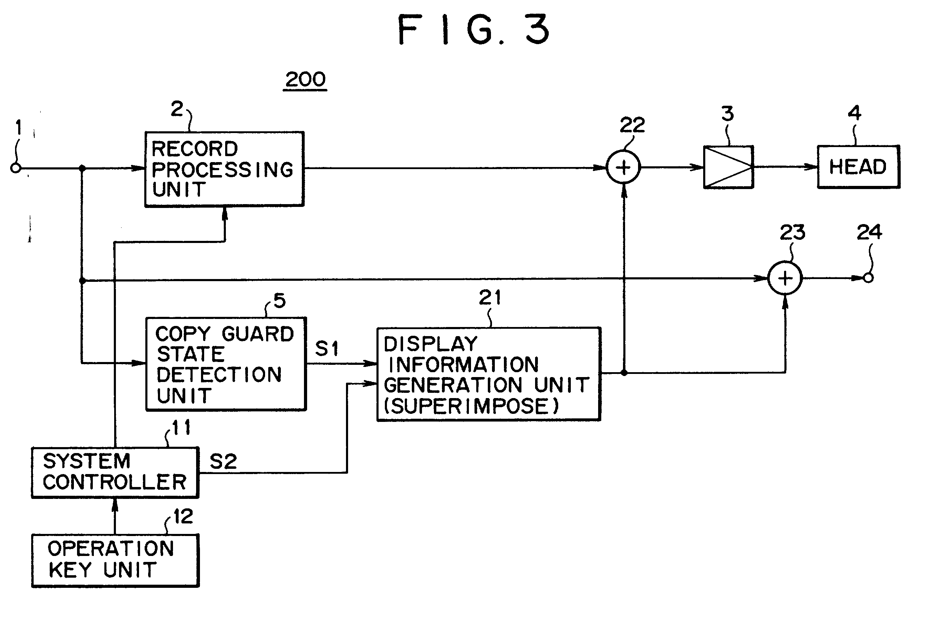

Fig. 3 is a block diagram for illustrating the video signal recording device 200. As shown in Fig. 3, the recording device 200 is provided with a display information generation unit 21 for generating display information to be displayed in a form of so-called superimpose, and a video signal output terminal 24 to be displayed on a monitor receiver.

An addition circuit 23 provided additionally between the video signal input terminal 1 and the video signal output terminal 24 superimposes a display information generated by the display information generation unit 21 on the output video signal to be displayed on a monitor receiver outputted from the video signal output terminal 24.

An addition circuit 22 is provided additionally between the record processing unit 2 and record amplification circuit 3. The display information generated by the display information generation unit 21 is superimposed also on the recording video signal to be supplied to the recording head 4 and to be recorded on a video tape.

The respective units excepting the display information generation unit 21, the addition circuits 22 and 23, and the video signal output terminal 24 are the same as the respective corresponding units of the recording device 100 of the first embodiment described hereinbefore.

The copy guard state detection unit 5, like in the first embodiment described hereinbefore, detects whether copy guard is applied to the input video signal inputted from the video signal input terminal 1. For detecting whether copy guard is applied, also in the recording device 200 like in the above-mentioned fist embodiment, whether an extremely high level pseudo sync signal is added to the video signal inputted via the video signal input terminal 1 as a pseudo sync signal for gain control performed by the recording device 200 or whether the color burst signal phase is inverted partially is detected.

The detected result by the copy guard state detection unit 5 is supplied to the display information generation unit 21 as the signal S1 which indicates that whether copy guard is applied to the input video signal as in the recording device 100 of the above-mentioned first embodiment.

The system controller 11 functions as an operation identification means, recognizes the current operation state of the recording device 200, and supplies the signal S2 for indicating operation state to the display information generation unit 21.

The display information generation unit 21, in the case that copy guard is applied to the input video signal and the recording device 200 is in recording state or record waiting state, generates a display information for indicating that copy guard is applied to the input video signal, and supplies the generated display information to the addition circuits 22 and 23.

The addition circuit 22 superimposes the display information generated by the display information generation unit 21 on the recording video signal generated by the record processing unit 2. As the result, the video signal having the superimposed display information generated by the display information generation unit 21 is supplied to the recording head 4 through the record amplification circuit 3, and recorded on a video tape.

The addition circuit 23 superimposes the display information generated by the display information generation unit 21 on the input video signal inputted from the video signal input terminal 1. The video signal on which the display information is superimposed by the addition circuit 23 is outputted from the recording device 200 via the video signal output terminal 24, and inputted, for example, to a monitor receiver.

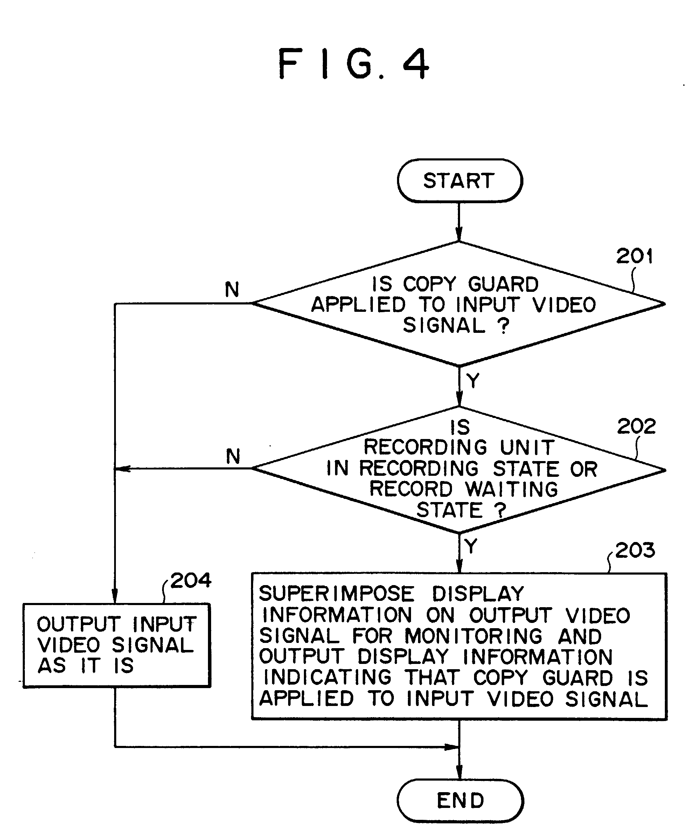

Fig. 4 is a flowchart for describing the process in the display information generation unit 21 of the recording device 200 of the second embodiment.

First, the display information generation unit 21 judges whether copy guard is applied to the input video signal based on the signal S1 from the copy guard state detection unit 5 (step 201).

If the input video signal is judged to be a video signal to which copy guard is not applied in the judgement process of the step 201, then whether the recording device 200 is in recording state or record waiting state is judged based on the signal S2 which indicates the operation state of the recording device 200 from the system controller 11 (step 202).

If the recording device 200 is judged to be in recording state or record waiting state in the judgement process of the step 202, then a display information for indicating that copy guard is applied to the input video signal is generated, and the generated display information is supplied to the addition circuits 22 and 23.

As the result, the display information which indicates that copy guard is applied to the input video signal is superimposed on the video signal to be recorded on a video signal and also on the output video signal to be outputted from the video signal output terminal 24.

On the other hand, if the input video signal is judged to be a video signal to which copy guard is not applied in the judgement process of the step 201, or if the recording device 200 is judged to be not in recording state or record waiting state in the judgement process of the step 202, then the display information generation unit 21 generates no display information which indicates that copy guard is applied to the input video signal, and the input video signal is outputted as it is (step 204).

As described herein above, in the recording device 200 of the second embodiment, if copy guard is applied to the input video signal and the recording device 200 is in recording state or record waiting state, the display information generation unit 21 generates a display information which indicates that copy guard is applied to the input video signal, and the display information is superimposed on the output video signal to be outputted to a monitor receiver for displaying.

The output video signal is supplied to a monitor receiver, and the display information for indicating that copy guard is applied to the input video signal is superimposed on a picture displayed on the display screen of the monitor receiver.

Because a video signal to be duplicated is usually monitored during duplication of the video signal, a message which indicates that copy guard is applied to the input video signal and the input video signal is not recorded normally is displayed consistently and clearly on the display screen of the monitor receiver.

As in the first embodiment described hereinbefore, in the case that a normal video signal is not obtained from the video signal recorded on a video tape because copy guard so-called macro-vision or color stripe is applied, a message which indicates that a normal video signal is not obtained is indicated to a user so as to recognize it when recording. In other words, it is informed to a user previously so that the user mistakes to think that a playback device used for playing back the video signal is failed to work.

For example, it could happen that a video signal is recorded normally dependently on AGC system of the recording device side or APC characteristics, in such a case, the display information for indicating that copy guard is applied to the input video signal is superimposed also on the recording video signal as described herein above.

As the result, in the case that a video signal duplicated normally because of ineffective copy guard in spite of applied copy guard is played back, the display information which indicates that a video signal to which copy guard is applied is duplicated is displayed in the form of superimpose on the playback picture. This superimpose indicates definitely that this video signal is a video signal to which copy guard is applied and which is duplicated illegally. In addition, the display information displayed in the form of superimpose disturbs viewing of the duplicated video signal, this is another effect for preventing illegal duplication.

### [Third embodiment]

In the above-mentioned recording device 200 of the second embodiment, in the case that copy guard is applied to the input video signal inputted from the video signal input terminal 1, the display information for indicating that copy guard is applied to the input video signal is generated, and superimposed on the output video signal.

The display information for indicating that copy guard is applied to the input video signal is displayed on the playback picture displayed on the display screen of a monitor receiver in the form of so-called superimpose, a notice that a normal playback picture is not obtained from the input video signal duplicated and played back is indicated consistently and clearly to a user.

It is, however, considered that the display information can not be viewed clearly dependently on the played back input video signal on which the display information is superimposed in the form of so-called superimpose. The recording device 300 of the third embodiment provides a recording device which is capable of indicating more clearly that copy guard is applied to the input video signal.

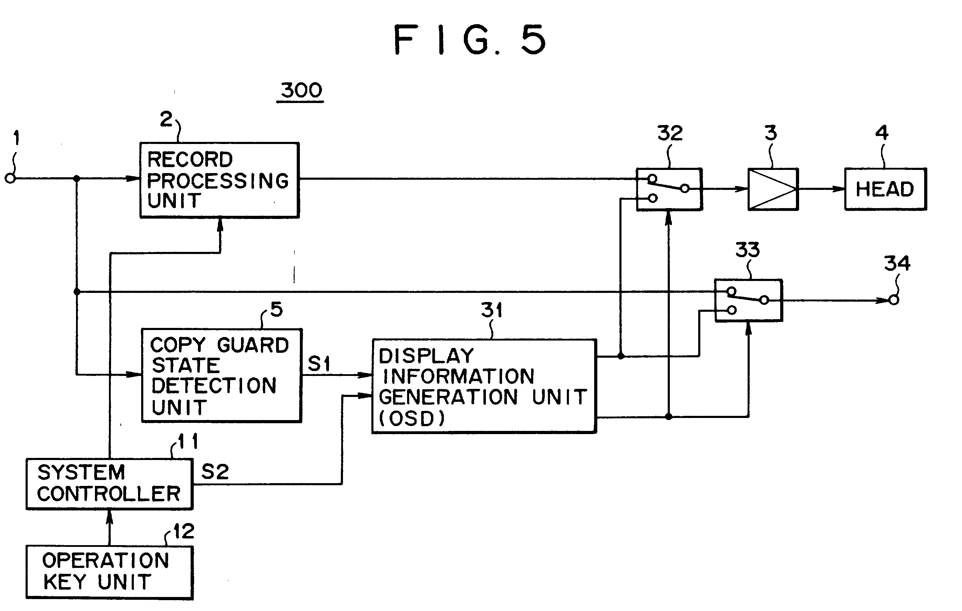

Fig. 5 is a block diagram for illustrating a recording device of the third embodiment. As shown in Fig. 5, the recording device 300 is provided with a display information generation unit 31 for generating a display information of, for example, one screen by means of so-called OSD (On Screen Display) and a video signal output terminal 34.

Further, a switch circuit 32 is provided between the record processing unit 2 and the record amplification unit 3, and a switch circuit 33 is provided between the video signal input terminal 1 and the video signal output terminal 34.

A recording video signal generated by the record processing unit 2 is supplied to the one input terminal of the switch circuit 32, and a display information from the display information generation unit 31 is supplied to the other input terminal. The input video signal inputted via the video signal input terminal 1 is supplied to the one input terminal of the switch circuit 33, and the display information from the display information generation unit 31 is supplied to the other input terminal.

The recording video signal generated by the record processing unit 2 and the display information of one screen generated by the display information generation unit 31 can be outputted with switching as a video signal to be supplied to the recording head and to be recorded on a video tape, and also the input video signal inputted from the video signal input terminal 1 and the display information of one screen generated by the display information generation unit 31 are outputted with switching as an output video signal outputted from the video signal output terminal 24.

The respective units excepting display information generation unit 31, addition circuits 32 and 33, and video signal output terminal 34 are the same as the respective corresponding units of the above-mentioned recording device 100 and recording device 200 of the first and second embodiments.

The copy guard state detection unit 5 detects whether an extremely high level pseudo sync signal is added to the video signal inputted via the video signal input terminal 1 as a pseudo sync signal for gain control performed by the recording device 300, or whether the color burst signal phase is inverted partially, as in the above-mentioned first embodiment in order to detect whether copy guard is applied to the input video signal.

The detection result obtained by the copy guard state detection unit 5 is supplied to the display information generation unit 31 as the signal S1.

The system controller 11 functions as an operation identification means as in the above-mentioned first embodiment, recognizes the current operation state of the recording device 300, and supplies the signal S2 which indicates the current operation state of the recording device 300 to the display information generation unit 31.

The display information generation section 31 receives supply of the signal S1 from the copy guard state detection unit 5 and the signal S2 from the system controller 11, and identifies whether copy guard is applied to the input video signal and whether the recording device 300 is in recording state or record waiting state or not.

If the input video signal is an input video signal to which copy guard is applied and the recording device 300 is identified to be in recording state or record waiting state, the display information generation unit 31 generates the display information of one screen which indicates that copy guard is applied to the input video signal and supplies it to the switches 32 and 33, and switches the switches 32 and 33 so that the display information from the display information generation unit 31 is outputted.

As the result, the display information generated by the display information generation unit 31 is supplied to the recording head 4 through the record amplification circuit 3, and the display information is recorded on a video tape. When, the display information generated by the display information generation unit 31 is outputted to the video signal output terminal 34. The display information outputted from the output terminal 34 is supplied to a monitor receiver, and the display information of one screen is displayed on the display screen of the monitor receiver.

If the input video signal is judged to be an input video signal to which copy guard is not applied, the display information generation unit 31 switches the switch circuit 32 so that the recording video signal from the record processing unit 2 is outputted, and switches the switch circuit 33 so that the input video signal is outputted.

In this case, the recording video signal generated by the record processing unit 2 correspondingly to the input video signal is recorded on a video tape by the recording head 4, and the input video signal is outputted from the video signal output terminal 34 as it is. The output video signal outputted from the output terminal 34 is supplied to the monitor receiver, and a picture of the output video signal is displayed and viewed.

The display information generation unit 31 switches the switches 32 and 33 so that the video signals from the record processing unit 2 and the input terminal 1 are outputted when operation state of the recording device 300 is identified to be not in recording state or not in record waiting state. By structuring the recording device 300 as described herein above, the display information from the display information generation unit 31 is outputted only when copy guard is applied to the input video signal and the recording device 300 is in recording state or record waiting state.

In the recording device 300, when copy guard is applied to the input video signal and the recording device 300 is in recording state as described herein above, the display information is recorded on a video tape and the same display information as recorded on the video tape is outputted from the output terminal 34.

As described herein above, the display information generation circuit 31 of the recording device 300 functions as a display information control means and functions also as a switching control means for switching the switch circuits 32 and 33.

The display information generated by the display information generation unit 31 is, for example, a display information of one screen, and for example, a display information that a message information such as "Duplication is inhibited. Recording is not performed" is displayed on a blue back screen.

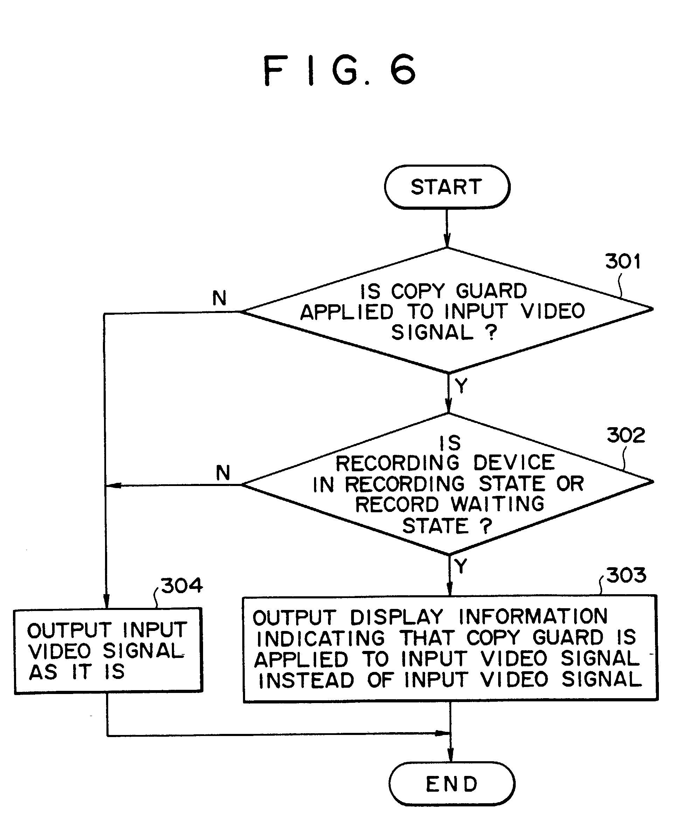

Fig. 6 is a flowchart for describing the process in the display information generation unit 31 of the recording device 300 of the third embodiment.

First, the display information generation unit 31 judges whether copy guard is applied to the input video signal based on the signal S1 from the copy guard state detection unit 5 (step 301).

If the input video signal is judged to be an input video signal to which copy guard is applied in the judgement process of the step 301, then whether the recording device 300 is in recording state or record waiting state or not is judged based on the signal S2 from the system controller 11 which indicates operation condition of the recording device 300 (step 302).

If the recording device 300 is judged to be in recording state or record waiting state in the judgement process of the step 302, then a display information for indicating that copy guard is applied to the input video signal is generated, and supplied to the switch circuits 32 and 33, and then the switch circuits 32 and 33 are switched so that the display information generated by the display information generation unit 31 is outputted (step 303).

On the other hand, if the input video signal is judged to be an input video signal to which copy guard is not applied in the judgement process of the step 301, or if the recording device 300 is judged to be not in recording state or not in record waiting state in the judgement process of the step 302, then a display information is not generated by the display information generation unit 31, and the input video signal is outputted as it is (step 304).

As described herein above, in the recording device 300, if copy guard is applied to the input video signal and the recording device 300 is in recording state or record waiting state, the display information of one screen generated by the display information generation unit 31 is recorded on a video tape and outputted from the output terminal 34, instead of the recording video signal which is generated by the recording processing unit 2 and supplied to the record amplification circuit 3, and the video signal which is inputted from the input terminal 1 and supplied to the output terminal 34.

In this case, a message which indicates that copy guard is applied to the input video signal is displayed, for example, on a monitor receiver for receiving supply of the video signal outputted from the output terminal 34 with superimposition on a blue back screen, and the message which indicates that copy guard is applied to the input video signal is indicated clearly.

In the case that copy guard is applied to the input video signal and the recording device 300 is in recording state, because the display information generated by the display information generation unit 31 is recorded on a video tape, when the video tape on which the display information is recorded is played back, a message which indicates that copy guard is applied the duplicated video signal and the duplication inhibited video signal was duplicated is notified definitely to a user, and duplication of a duplication inhibited video signal is prevented consistently.

### [Fourth embodiment]

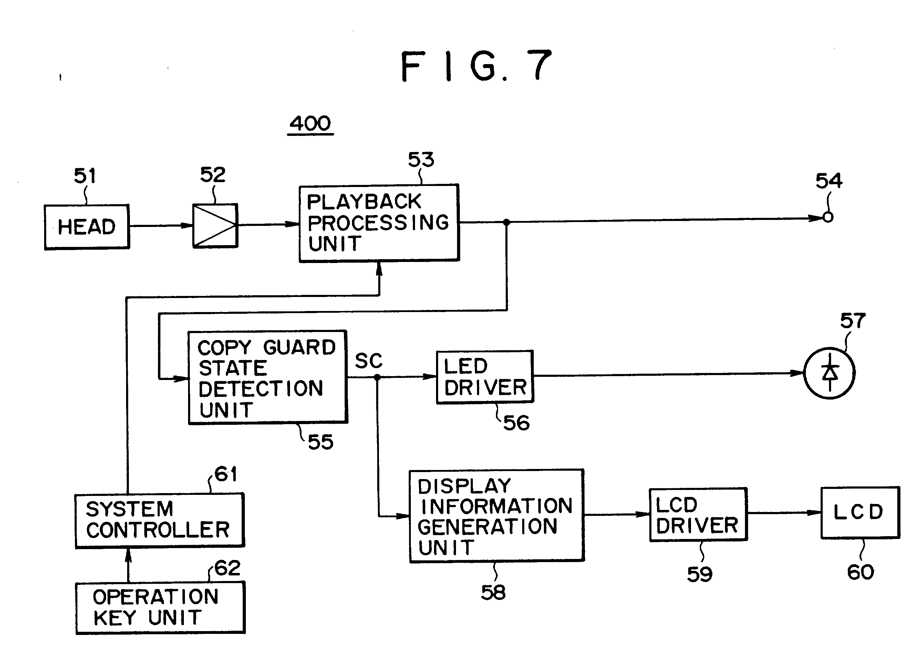

Fig. 7 is a block diagram for illustrating a video signal playback device 400 (refer to simply as playback device hereinafter) of this embodiment. The recording device 400 corresponds to the playback system of the VTR in the fourth embodiment.

As shown in Fig. 7, the playback device 400 is provided with a playback head 51, an amplification circuit 52, a playback processing unit 53, a video signal output terminal 54, a copy guard state detection unit 55, a LED (Light Emission Diode) driver 56, a LED 57, display information generation unit 58, a LCD (Liquid Crystal Display) driver 59, a LCD 60, a system controller 61, and an operation key unit 62.

The system controller 61 is a micro-computer provided with a CPU, ROM, and RAM, which system controller controls all the units of the playback device 400 of the fourth embodiment.

The operation key units 62 has various operation keys such as a playback start key (PLAY key), rewinding key (REW key), fast winding key (FWE key), and pause key (PAUSE key), which are operated by users.

When a user pushed down the playback start key, the system controller 61 transmits that a playback start is instructed to the playback processing unit 53 and controls all the units of the playback unit 400 to start the playback process.

The playback head 51 reads out the video signal recorded magnetically on a video tape mounted on the playback device 400, and supplies the read video signal to the playback processing unit 53 through the amplification circuit 52.

The playback processing unit 53 performs playback signal processing to convert it to an output playback video signal, supplies it to the video signal output terminal 54, and supplies it to the copy guard state detection unit 55.

The output playback video signal supplied to the video signal output terminal 54 is supplied , for example, to a monitor receiver via the output terminal 54, and the video signal played back from the video tape by the playback device 400 is displayed as a picture.

On the other hand, the copy guard state detection unit 55 detects whether copy guard is applied to the playback video signal supplied to it as in the case of recording devices of the embodiments described hereinbefore.

In detail, the copy guard state detection unit 55 detects whether an extremely high level pseudo sync signal is added on the playback video signal supplied to the copy guard state detection unit 55, or whether the color burst signal phase is inverted partially, and detects thereby whether copy guard is applied to the playback video signal supplied to the copy guard state detection unit 55.

The copy guard state detection unit 55 generates a high level signal SC if the copy guard state detection unit 55 detects that an extremely high level pseudo sync signal is added or if detects that the color burst signal phase is inverted partially, on the other hand, the copy guard state detection unit 55 generates a low level signal SC which indicates whether copy guard is applied to the input video signal, supplies the signal SC to the LED driver 56 and the display information generation unit 58 if both an extremely high level pseudo sync signal and the partially inverted color burst signal phase are not detected.

When the LED driver 56 receives supply of the high level signal from the copy guard state detection unit 55, the LED driver 56 supplies a driving current to the LED 57 to light the LED 57. Lighting or blinking of the LED 57 indicates a user that copy guard is applied to the playback video signal. As described herein above, the LED 57 functions as an indication means for indicating that copy guard is applied to the playback video signal.

If copy guard is applied to the playback video signal, the recording device 400 displays a message which indicates that.

The LCD 60 has a relatively large display screen like the LCD 10 of the recording device 100 of the first embodiment described hereinbefore, and can display therefore various messages such as a guidance message and notice message.

The display information generation unit 8 generates a display information to be displayed on the LCD 60 and supplies it to the LCD 60 through the LCD driver 59 if the signal SC from the copy guard state detection unit 55 indicates that copy guard is applied to the playback video signal.

As the result, a message such as "This is a duplication inhibited video signal, this video signal is not recorded normally" is displayed on the LCD 60 of the playback device 400.

As described hereinabove, in the playback device 400, if copy guard is applied to the played back playback video signal, the LED 57 lights or blinks, and also a message which indicates that copy guard is applied to the playback video signal is displayed on the LCD 60. A user can recognize that copy guard is applied to the playback video signal.

Accordingly, because a user can recognize that copy guard is applied to the playback video signal when playing back, useless duplication recording is prevented.

In the above-mentioned first embodiment, whether copy guard is applied to the input video signal is indicated by the LCD and LED, however only any one of them may be used.

Further it may be used that a LED or LCD is provided to the above-mentioned second or third embodiment and whether copy guard is applied to the input video signal is indicated using the LED or LCD.

A recording/playback device provided with the recording device of the above-mentioned first, second, or third embodiment and the playback device of the fourth embodiment may be structured.

In the above-mentioned embodiments, the case that a recording device and playback device are both VTR is described, however the recording device and playback device are not limited to the case, it is possible to apply the present invention to a DVD device, digital VTR, video CD playback device which are used for recording and playing back. To say briefly, the present invention is applicable to both analog devices such as analog VTRs and digital devices such as DVD devices.

Furthermore, in the copy guard state detection unit of the above-mentioned embodiments, whether copy guard so-called macro-vision or color stripe is applied is not detected, but it may be possible that, for example, a copy guard signal recorded in the innermost or outermost TOC (Table Of Contents) or in a track area called as directory is detected, or a copy guard signal recorded in a recording area on a track where video data and audio data are recorded, which recording area is a different recording area from that where the video data and audio data are recorded may be detected.

In this case, copy guard is judged based on the detected copy guard signal, and it is indicated to a user.

In the above-mentioned embodiments, the notice that copy guard is applied to the input or playback video signal is indicated by displaying, however it may be indicated by sound.
In this case, an alarm sound generation circuit and a speaker are provided to the recording device and playback device of the above-mentioned embodiments, and when copy guard is detected in the input or playback video signal, alarm is sounded from the speaker or an audio message is sounded through an audio synthesis circuit.

In the case that the audio synthesis circuit is provided, the audio message generated by the audio synthesis circuit is supplied to an audio system of the external device such as a monitor receiver, and the audio message is sounded from a speaker of the external device.

The notice that copy guard is applied to the input or playback video signal may be indicated using both audio sounding and displaying.

As described hereinbefore, according to the copy guard state indication method and video signal processing device of the present invention, if copy guard is applied to the input video signal or playback video signal, a notice is indicated to a user.

In the case that a user can not record a video signal normally and can not obtain a normal playback signal from the duplicated video signal because copy guard is applied to the video signal, it is prevented that the user mistakes to think that a recording device or playback device used as a video signal processing device is failed to work.

## Claims

1. A copy guard state indication method comprising the steps of:
detecting whether copy guard processing is applied to a video signal; and
if the copy guard processing applied to said video signal is detected, indicating the notice that copy guard processing is applied to said video signal.

2. A copy guard state indication method as claimed in claim 1, wherein if copy guard processing applied to said video signal is detected,
a display information signal for indicating that copy guard is applied to said video signal is generated,
said display information is superimposed on said video signal, and
said video signal on which said display information signal is superimposed is displayed,
to indicate that copy guard processing is applied to said video signal.

3. A copy guard state indication method comprising the steps of:
detecting that copy guard processing is applied to a video signal; and
if the recording state of said video signal in a recording medium or the record waiting state of said video signal in a recording medium is detected, indicating that copy guard processing is applied to said video signal.

4. A copy guard state indication method as claimed in claim 3, wherein, if copy guard processing applied to said video signal is detected and the recording state of said video signal in a recording medium or the record waiting state of said video signal in a recording medium is detected,
a display information signal for indicating that copy guard processing is applied to said video signal is generated,
said display information signal is superimposed on said video signal, and
said video signal on which said display information signal is superimposed is displayed,
to indicate that copy guard processing is applied to said video signal.

5. A copy guard state indication method as claimed in claim 3, wherein, if copy guard processing applied to said video signal is detected and the recording state of said video signal in a recording medium or the record waiting state of said video signal in a recording medium is detected,
a display information signal for indicating that copy guard processing is applied to said video signal is generated, and
said display information is displayed instead of said video signal,
to indicate that copy guard processing is applied to said video signal.

6. A copy guard state indication method as claimed in any one of the preceding claims, wherein said copy guard processing is a process to prevent normal playback of said video signal from a recording medium after recording said video signal on said recording medium.

7. A copy guard state indication method as claimed in any one of the preceding claims, wherein the notice that copy guard processing is applied to said video signal is indicated by a display.

8. A copy guard state indication method as claimed in any one of the preceding calims, wherein the notice that copy guard processing is applied to said video signal is indicated by a sound or a voice.

9. A video signal processing device provided with:
detection means for detecting whether copy guard processing is applied to a video signal; and
indication means for indicating, if copy guard applied to said video signal is detected, that copy guard is applied to said video signal.

10. A video signal processing device as claimed in claim 9, wherein the notice that copy guard processing is applied to said video signal is indicated by a display.

11. A video signal processing device as claimed in claim 9 or 10, wherein the notice that copy guard processing is applied to said video signal is indicated by a sound.

12. A video signal processing device provided with:
detection means for detecting whether copy guard processing is applied to a video signal;
display information generation means for generating a display information signal for indicating that copy guard processing is applied to said video signal if said detection means detects copy guard processing applied to said video signal;
superimposition means for superimposing said display information signal on said video signal; and
display means for displaying said video signal on which said display information signal is superimposed.

13. A video signal processing device provided with:
detection means for detecting whether copy guard is applied to a video signal;
operation identification means for detecting the recording state of said video signal in a recording medium or record waiting state of said video signal in a recording medium; and
indication means for indicating that copy guard is applied to said input video signal if said detection means detects copy guard applied to said video signal and said operation identification means detects the recording state of said video signal in a recording medium or the record waiting state of said video signal in a recording medium.

14. A video signal processing device provided with:
detection means for detecting whether copy guard is applied to a video signal;
operation identification means for detecting the recording state of said video signal in a recording medium or the record waiting state of said video signal in a recording medium;
display information generation means for generating a display information signal for indicating that copy guard is applied to said video signal if said detection means detects copy guard applied to said video signal and said operation identification means detects the recording state of said video signal in a recording medium or the record waiting state of said video signal in a recording medium;
superimposition means for superimposing said display information signal on said video signal; and
display means for displaying said video signal on which said display information signal is superimposed.

15. A video signal processing device as claimed in any one of claims 12 to 14, wherein said indication means is display means.

16. A video signal processing device as claimed in any one of claims 12 to 15, wherein said indication means is sound or voice generation means.

17. A video signal processing device as claimed in any one of claims 9 to 16, wherein said copy guard processing is a process to prevent normal playback of said video signal from said recording medium after recording said video signal in said recording medium.
